Europäisches Patentamt

European Patent Office

Office européen des brevets

(19)

(11) **EP 0 797 133 A1**

(12) **EUROPÄISCHE PATENTANMELDUNG**

(43) Veröffentlichungstag:
24.09.1997 Patentblatt 1997/39

(51) Int. Cl.⁶: $G05B\ 11/42$, $G05D\ 19/02$

(21) Anmeldenummer: 97103558.9

(22) Anmeldetag: 04.03.1997

(84) Benannte Vertragsstaaten:
AT DE FR GB IT

(30) Priorität: 18.03.1996 DE 19610573

(71) Anmelder: SIEMENS AKTIENGESELLSCHAFT
80333 München (DE)

(72) Erfinder: Vöckel, Erhard, Dr.
91096 Möhrendorf (DE)

(54) **Torsionsoptimierung drehzahlgeregelter elektrischer Antriebe mit drehelastischer Mechanik mit einem PI-Regler**

(57)     Die Erfindung bezieht sich auf ein Verfahren zur Torsionsoptimierung eines drehzahlgeregelten Antriebs mit drehelastischer Mechanik bei drehzahlunabhängiger Belastung, wobei ein PI-Regler (2) als Drehzahlregler und eine zusätzliche Drehzahlsollwertglättung (8) verwendet werden. Erfindungsgemäß werden in Abhängigkeit eines Hochlauftests und einer vorbestimmten Zeitkonstante (TM) des Antriebsmotors eine mechanische Zeitkonstante (Tm) des Antriebssystems und eine Torsionseigenfrequenz (fe) ermittelt, mit denen dann die Reglerverstärkung (VR) und die Nachstellzeit (TN) des PI-Reglers (2) und die Verzögerungszeit (Tgl) der zusätzlichen Drehzahlsollwertglättung (8) berechnet und eingestellt werden. Somit kann bei Gleich- und Drehstromantrieben mit einem Selbstoptimierungssystern bei der Optimierung der Drehzahlschleife die Torsionsoptimierung berücksichtigt werden, ohne daß sich für den Anwender der Aufwand erhöht, wobei sich eine verbesserte Regeldynamik im Führungs- und Laststörverhalten gegenüber den bisherigen Torsionsoptimierungsverfahren ergibt.

FIG 1

**Beschreibung**

Die Erfindung bezieht sich auf ein Verfahren zur Torsionsoptimierung eines drehzahlgeregelten Antriebs mit drehelastischer Mechanik, wobei ein PI-Regler als Drehzahlregler und eine zusätzliche Drehzahl-Sollwertglättung verwendet werden.

Stromrichtergeregelte elektrische Antriebssysteme dienen generell zum Antreiben mechanischer schwungmassebehafteter Systeme in technologischen Prozessen. Es bilden sich deshalb mit der Antriebsmaschine drehelastische mechanische Zwei-bzw. Mehrmassensysteme aus, die je nach Höhe der Eigenfrequenz, der jeweiligen Massenverhältnisse mehr oder weniger Einfluß auf den drehzahlgeregelten Antrieb nehmen. Werden diese Tatsachen nicht berücksichtigt, kommt es zu dynamischen Torsionsbeanspruchungen bei Führungs-, bei Laständerungen und bestimmten Störsignalen, die zu frühzeitigem Verschleiß und Ausfallen von Kupplungen, Getrieben und in ungünstigen Fällen auch zu Wellenbrüchen führen können.

In dem Aufsatz "Optimierung drehzahlgeregelter elektrischer Antriebe mit drehelastischer Mechanik (Teil 1)", abgedruckt in der DE-Zeitschrift "messen steuern regeln", Band 30, 1987, Heft 9, Seiten 386-394, und im Aufsatz "Optimierung drehzahlgeregelter elektrischer Antriebe mit drehelastischer Mechanik (Teil 2)", abgedruckt in der DE-Zeitschrift "messen steuern regeln", Band 30, 1987, Heft 10, Seiten 460-463, sind Optimierungsregeln bei Berücksichtigung eines Zweimassensystems mit und ohne drehzahlabhängige Belastung für eine Torsionseigenfrequenz kleiner einer Grenzfrequenz des Drehzahlregelbereiches bzw. für eine Torsionseigenfrequenz größer einer Grenzfrequenz des Drehzahlregelbereiches unter Verwendung eines Verzögerungsgliedes 1. Ordnung und Optimierungsregeln bei Berücksichtigung eines Zweimassensystems mit nichtlinearer, drehzahlabhängiger Belastung und Lose (Kupplung, Gelenkwellen) angegeben.

Die Torsionseigenfrequenzen liegen beispielsweise im Bereich von ca. 6 bis 60 Hz. Die aufgestellten Optimierungsregeln gelten für Torsionseigenfrequenzen, die sowohl innerhalb als auch außerhalb der zulässigen Grenzfrequenz des Drehzahlregelkreises liegen. Sie erfassen damit auch die Torsionsfrequenzen bei großen Antriebsleistungen (6 Hz).

Eine Torsionsoptimierung nach diesen angegebenen Optimierungsvorschriften sorgt für die kleinste dynamische Torsionsbeanspruchung. Diese läßt sich durch eine zusätzliche Drehzahlsollwertglättung bezüglich des Führungsverhaltens noch weiter verbessern. Zur Vermeidung von Torsionsschwingungen muß eine Verschlechterung der Regeldynamik beim Führungs- und Laststörverhalten in Kauf genommen werden. Unter Regeldynamik werden hier in erster Linie die Anregelzeiten beim Führungs- und Laststörverhalten und die maximale dynamische Regelabweichung beim Laststörverhalten verstanden.

Ist die Torsionseigenfrequenz größer als die Grenzfrequenz des Drehzahlregelkreises, so ist ein zusätzliches Verzögerungsglied 1. Ordnung im Vorwärtszweig des Drehzahlregelkreises einzufügen. Durch dieses zusätzliche Verzögerungsglied 1. Ordnung wird die dynamische Torsionsbeanspruchung ebenfalls vermieden.

Die heutigen im Handel erhältlichen stromrichtergeregelten Gleich- und Drehstromantriebe sind mit Selbstoptimierungssystemen ausgestattet, die eine Optimierung der Drehzahlregelschleife nach einem beliebigen Optimum vorsehen. Eine Inbetriebnahme und Optimierung elektrisch geregelter Antriebe soll schnell und einfach möglich sein, wobei es gilt, Personalkosten einzusparen. Hier zeigen sich die Vorteile einer Software, wodurch eine anwenderfreundliche Parametrierung und Optimierung von stromrichtergeregelten Antrieben möglich ist.

Obwohl jedes Antriebssystem ein schwingungsfähiges System mit einer ihm eigenen Schwingungsfrequenz darstellt, findet es bisher keine Berücksichtigung bei der Selbstoptimierung. Dadurch läßt man frühzeitigen Verschleiß und die Verringerung der Standzeiten der mechanischen Systemteile zu. Für Notfälle gibt es ein bzw. zwei Resonanzfilter, die bei "hartnäckigen Fällen" mühsam eingestellt und abgeglichen werden müssen. Sie können auch nur beim Führungsverhalten Torsionsschwingungsanregungen verhindern. Sie helfen nicht bei Laststörungen und bei bestimmten Störsignalen, schon gar nicht auf der Lastdrehzahlseite, also der Seite, die den Kunden für seinen technologischen Prozeß eigentlich interessiert.

Der Erfindung liegt nun die Aufgabe zugrunde, ein Verfahren zur Torsionsoptimierung eines drehzahlgeregelten Antriebes mit drehelastischer Mechanik für die in der Praxis vorkommenden Anlagen anzugeben, das für drehzahlunabhängige und drehzahlabhängige Belastungen, mit und ohne Lose, die entsprechenden Regelparameter bei der Selbstoptimierung sicher und robust einstellt.

Diese Aufgabe wird erfindungsgemäß mit den kennzeichnenden Merkmalen des Anspruchs 1 gelöst.

Mittels eines Hochlauftests wird die mechanische Zeitkonstante des Antriebssystems berechnet, wobei aus dem Verlauf der Motordrehzahl die Torsionseigenfrequenz und der Dämpfungsfaktor der Torsionseigenfrequenz ermittelt werden. Mit Hilfe dieser ermittelten Werte können die Parameter der Drehzahlregelschleife mittels der im Anspruch 1 angegebenen Beziehungen berechnet werden. Diese Einstellregeln sind so gestaltet, daß eine einfache Selbstoptimierung des Drehzahlregelkreises unter Berücksichtigung der drehelastischen Mechanik erfolgen kann. Außerdem wird das regeldynamische Verhalten unter Beibehaltung einer robusten Einstellungsstrategie verbessert. Mit diesen Einstellregeln werden wesentlich kürzere Anregelzeiten beim Laststörverhalten erreicht, wobei die maximale dynamische Torsionsbeanspruchung zwischen der Motordrehzahl und der Lastdrehzahl um über 80 % reduziert wird.

Mit einem vorteilhaften Verfahren, wobei im Vorwärtszweig des Drehzahlregelkreises ein zusätzliches Verzögerungsglied verwendet wird, werden mit den ermittelten Werten für die mechanische Zeitkonstante und der Torsionseigenfrequenz des Antriebssystems in Abhängigkeit der vorgegebenen Zeitkonstante des Antriebsmotors und eines vorgegebenen Dämpfungsfaktors der Torsionseigenfrequenz Einstellregeln, für die Regelverstärkung und die Nachstellzeit des PI-Reglers, die Verzögerungszeit der zusätzlichen Drehzahlsollwertglättung und die Zeitkonstante des zusätzlichen Verzögerungsgliedes angegeben, wodurch beim Führungsverhalten die Überschwingweiten erheblich reduziert werden.

Mit einem weiteren vorteilhaften Verfahren, wobei dem zusätzlichen Verzögerungsglied im Drehzahlregelkreis ein Resonanzfilter nachgeschaltet ist, werden die Parameter Regelverstärkung und Nachstellzeit des PI-Reglers sowie die Verzögerungszeit der zusätzlichen Drehzahlsollwertglättung und die Zeitkonstante des zusätzlichen Verzögerungsgliedes in Abhängigkeit der ermittelten mechanischen Zeitkonstante des Antriebssystems, der Torsionseigenfrequenz und dessen Dämpfungsfaktors bestimmt, wobei die Frequenz und der Dämpfungsfaktor des zusätzlichen Resonanzfilters gleich der Torsionseigenfrequenz und dessen Dämpfungsfaktors gesetzt werden. Dadurch wird die Resonanzüberhöhung der Torsionseigenfrequenz kompensiert, wodurch die Regelverstärkung des PI-Reglers bis zum Faktor zehn erhöht werden kann. Somit wird nicht nur die dynamische Torsionsbeanspruchung vermieden, sondern gleichzeitig eine wesentliche Erhöhung der Regeldynamik des Drehzahlregelkreises erreicht.

Bei einem weiteren vorteilhaften Verfahren sind die vorgenannten Einstellregeln abgespeichert, so daß in Abhängigkeit eines Vergleiches der ermittelten Torsionseigenfrequenz mit einer Summenzeitkonstanten der Drehzahlregelschleife die Parameter des PI-Reglers, der zusätzlichen Drehzahlsollwertglättung, des zusätzlichen Verzögerungsgliedes und des Resonanzfilters entsprechend dem besten Verfahren berechnet werden können. Somit wird die Torsionsoptimierung bei einem Selbstoptimierungssystem eines Gleich- bzw. Drehstromantriebs bei der Optimierung der Drehzahlregelschleife unabhängig von der Größe der Torsionseigenfrequenz mitberücksichtigt.

Die Erfindung soll nachstehend anhand von Ausführungsbeispielen näher erläutert werden.

| | |
|---|---|
| Figur 1 | zeigt einen vereinfachten Signalflußplan einer strukturoptimal angepaßten mehrschleifigen Drehzahlregelung mit drehelastischer Mechanik eines Zweimassensystems, in |
| Figur 2 | ist das Führungsverhalten einer bekannten und einer erfindungsgemäßen Torsionsoptimierung in einem Diagramm über der Zeit t dargestellt, wobei in der |
| Figur 3 | das Lastverhalten einer bekannten und einer erfindungsgemäßen Torsionsoptimierung in einem Diagramm über der Zeit t dargestellt ist, die |
| Figur 4 | zeigt den vereinfachten Signalflußplan nach Figur 1 mit einem zusätzlichen Glättungsglied im Vorwärtszweig hinter dem Drehzahlregler, in der |
| Figur 5 | ist das zugehörige Führungsverhalten einer bekannten und einer erfindungsgemäßen Torsionsoptimierung in einem Diagramm über der Zeit t veranschaulicht, die |
| Figur 6 | zeigt den vereinfachten Signalflußplan nach Figur 4 mit einem zusätzlichen Resonanzfilter im Vorwärtszweig hinter dem Drehzahlregler, die |
| Figur 7 | zeigt in einem Diagramm über der Kreisfrequenz $\omega$ den Amplitudenverlauf des offenen Frequenzgangs von der Motordrehzahl mit und ohne Resonanzfilter, in der |
| Figur 8 | ist in einem Diagramm über der Zeit t das Führungsverhalten für die Motor- und Lastdrehzahl des Signalflußplans gemäß Figur 6 dargestellt, wobei die |
| Figur 9 | in einem Diagramm über der Zeit t das zugehörige Laststörverhalten für die Motor- und Lastdrehzahl veranschaulicht. |

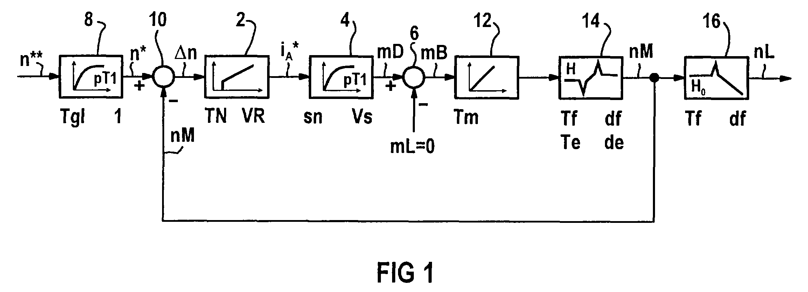

Die Figur 1 zeigt einen vereinfachten Signalflußplan einer strukturoptimal angepaßten mehrschleifigen Drehzahlregelung mit drehelastischer Mechanik eines Zweimassensystems, wie er aus dem eingangs genannten Aufsatz bekannt ist. Dieser Signalflußplan weist einen Drehzahlregler 2, eine vereinfachte Stromregelschleife 4, einen Vergleicher 6 und eine zusätzliche Drehzahlsollwertglättung 8 mit einem nachgeschalteten Vergleicher 10 auf. Die Trägheitsmomente des Motors und der Last werden durch ein I-Glied 12 dargestellt. Die Blöcke 12, 14 und 16 stellen die drehelastische Mechanik eines Zweimassensystems dar. Der Block 14 ist dabei eine multiplikative Ergänzungsfunktion H der Motordrehzahl nM, der Block 16 eine multiplikative Ergänzungsfunktion Ho der Lastdrehzahl nL. Die Ergänzungsfunktion H für ein Zweimassensystem besteht aus einem Vorhalteglied 2. Ordnung, das physikalisch die Last als Einmassenschwinger bei (durch die Drehzahlregelung) festgehaltenem Motor darstellt (gefesselte Frequenz ff), und einem Verzögerungsglied 2. Ordnung, das physikalisch das freischwingende Zweimassensystem mit der Eigenfrequenz fe verkörpert. Die charakteristischen Kenndaten sind die Zeitkonstanten Tf (Zeitkonstante bei gefesselter Frequenz ff) und Te (Zeitkonstante bei Eigenfrequenz fe) und die Dämpfungsfaktoren df (Dämpfungsfaktor bei gefesselter Frequenz ff) und de (Dämpfungsfaktor bei Eigenfrequenz fe). Als zusätzliche Drehzahlsollwertglättung 8 ist ein Verzögerungsglied 1. Ordnung vorgesehen mit einer Verzögerungszeit Tgl. Eingangsseitig steht an dieser Drehzahlsollwertglättung 8 ein Drehzahl-Sollwert n** als Führungsgröße an. Der negative Eingang des nachfolgenden Vergleichers 10 ist mit einem Ausgang des Blockes 14, der Motordrehzahl, verknüpft. Am Ausgang dieses Vergleichers 10 steht die Regeldifferenz Δn der Drehzahl n an. Diese Drehzahl-Regeldifferenz Δn wird dem Drehzahlregler 2 zugeführt. Als Drehzahlregler 2 ist ein PI-Regler vorgesehen, dessen charakteristische Kenndaten die Reglerverstärkung VR und die Nachstellzeit TN ist. Am Ausgang dieses PI-Reglers 2 steht ein Strom-Sollwert $i_A^*$ an, der dem Block 4 zugeführt wird. Als Block 4 ist ein Verzögerungsglied 1. Ordnung mit einer Regelstrecken-Verstärkung VS und einer Zeitkonstanten sn vorgesehen. In diesem Signalflußplan wurde als Modell des geschlossenen Stromregelkreises und der Momentenbildung ein Verzögerungsglied 1. Ordnung gewählt. Am Ausgang des Blockes 4 erhält man einen Wert für das Drehmoment mD des Motors. Am negativen Eingang des nachgeschalteten Vergleichers 6 steht ein Wert des Lastmomentes mL als Störgröße an, der bei dieser Betrachtung Null ist. Am Ausgang des Vergleichers 6 erhält man einen Wert für das Beschleunigungsmoment mB. Dieses Beschleunigungsmoment mB wird dem Motor mit dem Zweimassensystem zugeführt, wobei am Ausgang des Blockes 14 ein Wert für die Motordrehzahl nM und am Ausgang des Blockes 16 ein Wert für die Lastdrehzahl nL anstehen. Die Integrierzeit I-Gliedes 12, der den Antrieb (Motor mit Last) als Modell nachbildet, ist die mechanische Zeitkonstante Tm, die gleich der Summe der Motorzeitkonstante TM und der Lastzeitkonstante TL ist. Jedem Motor ist eine Motorzeitkonstante TM zugeordnet, die von den Abmessungen und Massen des Motors abhängig ist.

Wie diesem Signalflußplan zu entnehmen ist, sind die Parameter Reglerverstärkung VR, Nachstellzeit TN, Verzögerungszeit Tgl, mechanische Zeitkonstante Tm und Lastzeitkonstante TL noch nicht bekannt. Mittels eines Hochlauftests werden die mechanische Zeitkonstante Tm und die Torsionseigenfrequenz fe ermittelt. Dazu wird bei offenem Drehzahlregelkreis ein Strom-Sollwert $i_A^*$ eingeprägt und der Verlauf der Motordrehzahl nM aufgezeichnet. Sobald der Verlauf der Motordrehzahl den Verlauf des Strom-Sollwertes $i_A^*$ schneidet, kann man den Wert der Integrierzeit Ti der Blöcke 4 und 12 nach dem Hochlauf ermitteln. Diese Integrierzeit Ti ist abhängig von der mechanischen Zeitkonstante Tm und der Regelstrecken-Verstärkung VS. Somit ist die mechanische Zeitkonstante Tm mit bekannter Regelstrecken-Verstärkung VS berechenbar. Aus dem Verlauf der Motordrehzahl nM, die am Anfang die Form einer abklingenden Sinusfunktion hat, kann man die Torsionseigenfrequenz fe (Reziprokwert der Zeit zwischen zwei Scheitelwerten) und aus dem Abklingen den Dämpfungsfaktor de der Torsionseigenfrequenz fe bestimmen.

Mit diesen ermittelten Werten für die mechanische Zeitkonstante Tm, die Torsionseigenfrequenz fe und den Dämpfungsfaktor de der Torsionseigenfrequenz fe lassen sich nun die Reglerverstärkung VR und die Nachstellzeit TN des PI-Reglers 2 und die Verzögerungszeit Tgl der zusätzlichen Drehzahlsollwertglättung 8 berechnen. Diese Parameter werden mit den folgenden erfindungsgemäßen Einstellregeln berechnet; wenn die Torsionseigenfrequenz fe≤fn ist:

$$VR = \frac{2 \cdot \pi \cdot fe \cdot Tm}{VS\left(\frac{Tm}{TM}\right)^{3/4}}$$

$$TN = \frac{2}{\pi \cdot fe} \cdot \left(\frac{Tm}{TM}\right)^{1/2}$$

$$Tgl = TN$$

mit

$$fn = \frac{1}{2\pi sn}$$

Diese Einstellregeln sind so formuliert, daß während eines Optimierungsverfahrens diese Parameter bestimmt und im Drehzahlregelkreis eingestellt werden können.

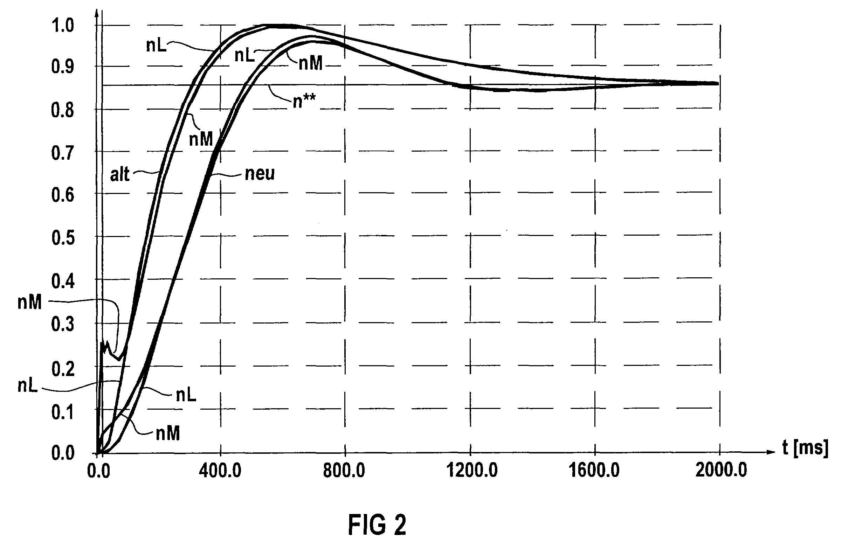

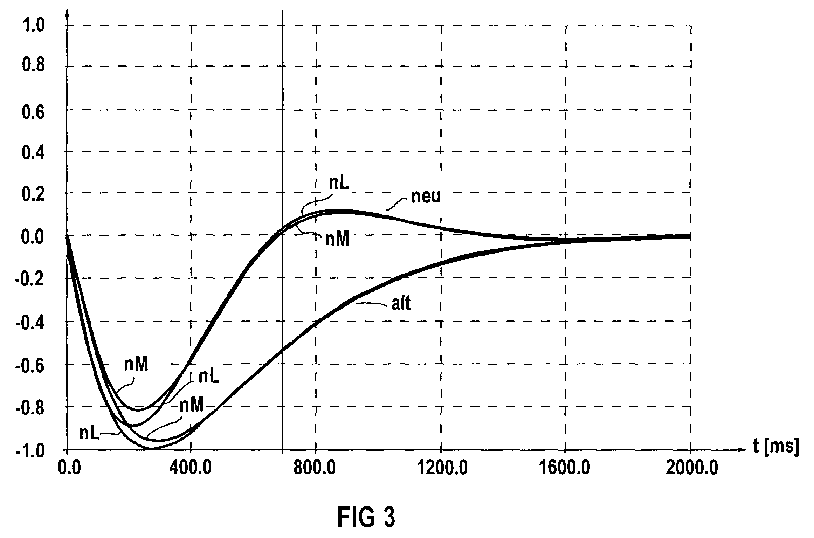

Mit diesen neuen Einstellregeln lassen sich wesentlich kürzere Anregelzeiten beim Laststörverhalten erreichen, als mit den im eingangs genannten Aufsatz genannten Einstellregeln. Außerdem wird die maximale dynamische Torsionsbeanspruchung zwischen nM und nL um über 80 % reduziert. Diese Vorteile sind aus den Diagrammen der Figuren 2 und 3 deutlich ersichtlich. Im Diagramm gemäß Figur 2 wird das Führungsverhalten des Drehzahlregelkreises mit der bekannten Torsionsoptimierung (alt) und mit der erfindungsgemäßen Torsionsoptimierung (neu) gegenübergestellt. Im Diagramm gemäß Figur 3 werden das Laststörverhalten mit bekannter Torsionsoptimierung (alt) und erfindungsgemäßer Torsionsoptimierung (neu) einander gegenübergestellt.

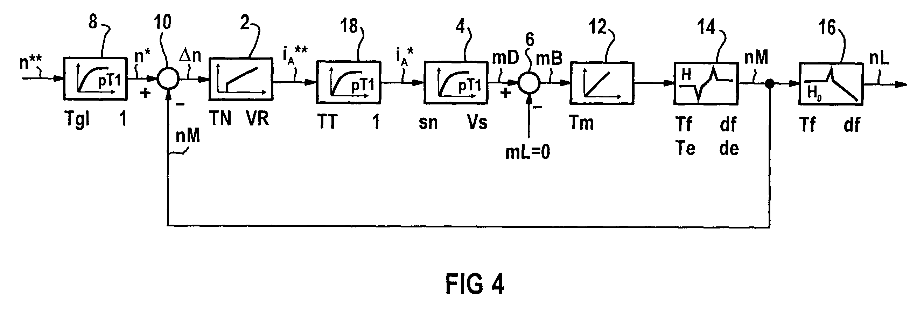

Die Figur 4 zeigt einen vereinfachten Signalflußplan einer vorteilhaften strukturoptimal angepaßten mehrschleifigen Drehzahlregelung für eine drehelastische Mechanik eines Zweimassensystem. Dieser Signalflußplan unterscheidet sich vom Signalflußplan gemäß Figur 1 dadurch, daß im Vorwärtszweig des Drehzahlregelkreises ein zusätzliches Verzögerungsglied 18, beispielsweise 1. Ordnung, verwendet wird. Dieses zusätzliche Verzögerungsglied 18 ist dem Drehzahlregler 2 nachgeschaltet und wird als Filter verwendet. Dieser Signalflußplan ist ebenfalls aus dem eingangs genannten Aufsatz bekannt. Dieses zusätzliche Verzögerungsglied 18 wurde in den Drehzahlregelkreis eingefügt, um damit die dynamische Torsionsbeanspruchung zu vermeiden, wenn die Ermittlung der Torsionseigenfrequenz fe ergibt, daß fe>fn ist.

Mit den folgenden erfindungsgemäßen Einstellregeln:

$$VR = \frac{Tm}{2 \cdot VS \cdot TT}$$

$$TT = \frac{\left(\frac{Tm}{TM} \cdot \frac{Re}{2}\right)^{1/2}}{2 \cdot \pi \cdot fe} \qquad \text{mit } Re \approx \frac{1}{2 \cdot de} \text{ ; } de = 0,001$$

$$TN = Tgl = 4 \cdot TT$$

können nun die Parameter Regelverstärkung VR, Nachstellzeit TN, Verzögerungszeit Tgl und Zeitkonstante TT des zusätzlichen Verzögerungsgliedes 18 während eines Optimierungsverfahrens berechnet werden. Die mechanische Zeitkonstante Tm des Antriebssystems und die Torsionseigenfrequenz fe werden mittels eines Hochlauftests ermittelt. Der Dämpfungsfaktor de wird wie bei der zuvor genannten Parameterberechnung mit de=0,001 angesetzt, wodurch der ungünstigste Fall angenommen wird.

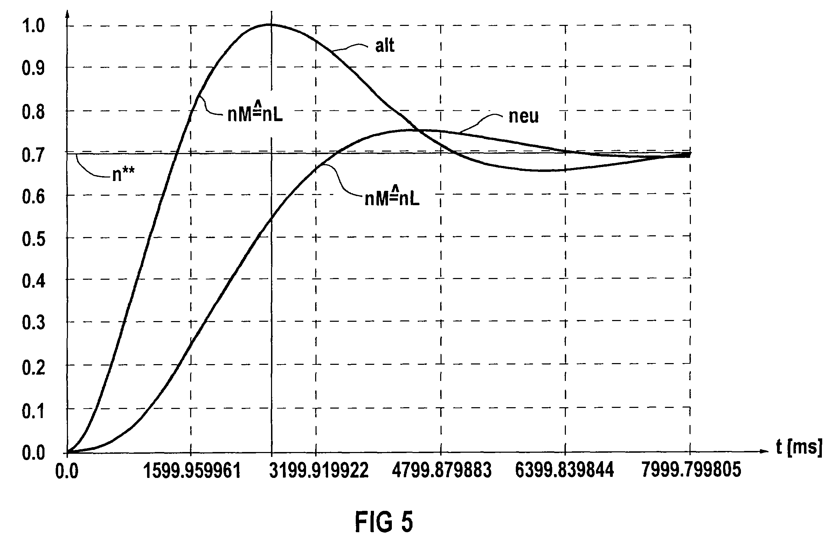

Mit diesen neuen Einstellregeln lassen sich beim Führungsverhalten die Überschwingweiten von bisher 43 % auf 8 % reduzieren. Dies zeigt sehr anschaulich das Diagramm gemäß Figur 5. In diesem Diagramm sind das Führungsverhalten bei bekannter Torsionsoptimierung (alt) und bei erfindungsgemäßer Torsionsoptimierung (neu) einander gegenübergestellt.

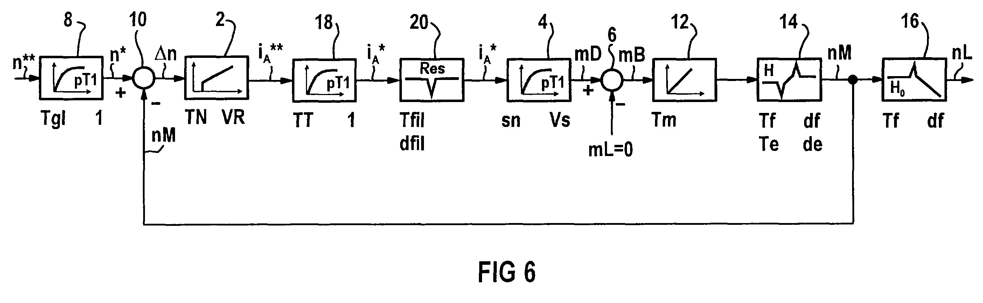

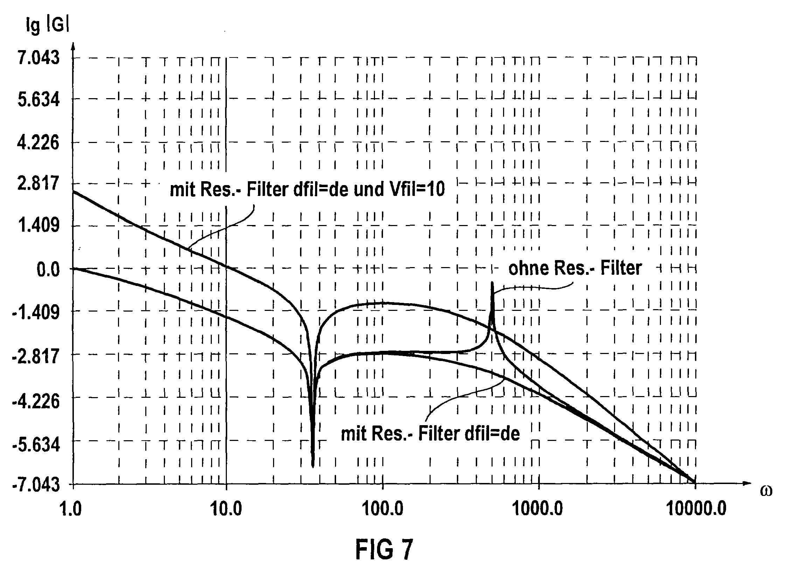

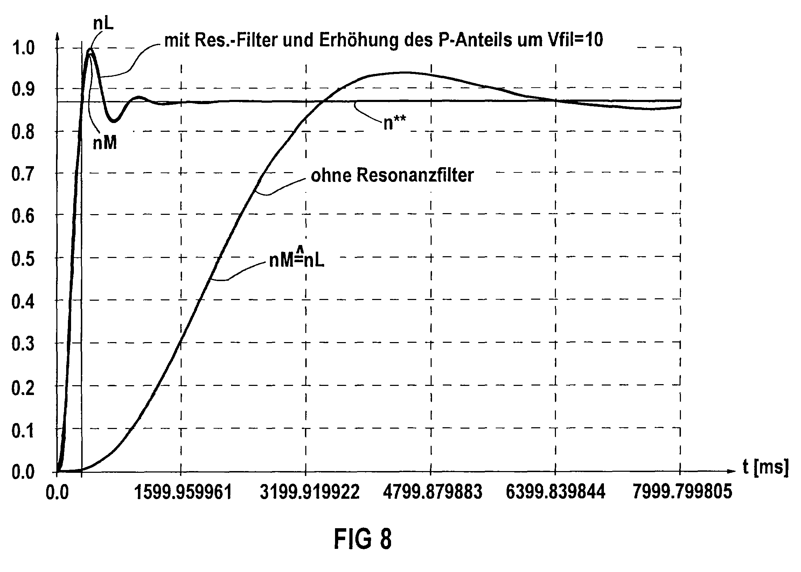

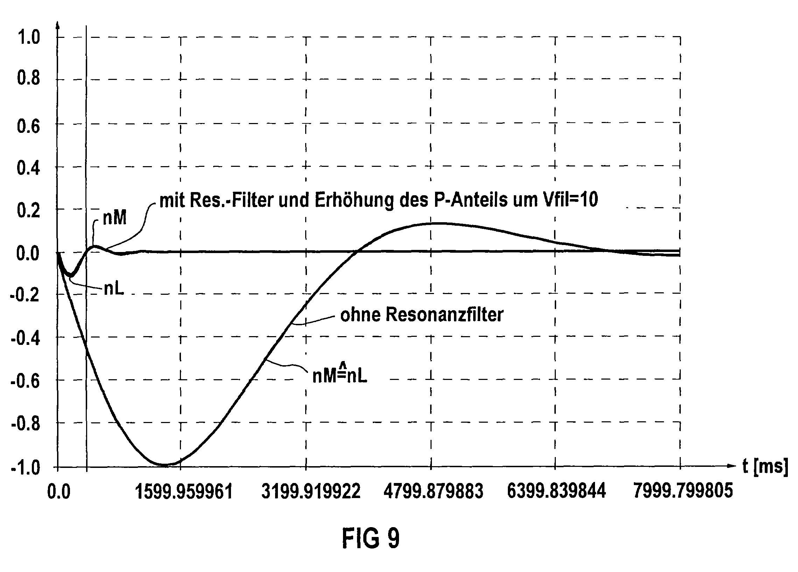

Die Figur 6 zeigt einen vereinfachten Signalflußplan einer weiteren vorteilhaften struktureoptimal angepaßten mehr-schleifigen Drehzahlregelung für eine drehelastische Mechanik eines Zweimassensystem. Dieser Signalflußplan unterscheidet sich vom Signalflußplan gemäß Figur 4 dadurch, daß dem zusätzlichen Verzögerungsglied 18 ein Resonanzfilter 20 nachgeschaltet ist. Dieser Resonanzfilter 20 wird zur Kompensation der Resonanzüberhöhung Re der Eigenfrequenz fe verwendet und derart abgeglichen, daß dessen Frequenz ffil gleich der Torsionsfrequenz fe ist und dessen Dämpfungsfaktor dfil=0,001 gesetzt wird. Mit den Einstellregeln gemäß Figur 4 werden dann die Parameter Reglerverstärkung VR, Nachstellzeit TN, Verzögerungszeit Tgl und Zeitkonstante TT des zusätzlichen Verzögerungsgliedes 18 während eines Optimierungsverfahrens berechnet. Zuvor werden wieder die mechanische Zeitkonstante Tm des Antriebssystems, die Torsionseigenfrequenz fe und der Dämpfungsfaktor de der Torsionseigenfrequenz fe mittels eines Hochlauftests ermittelt. Wenn der Wert des ermittelten Dämpfungsfaktors de zwischen 0,1 und 0,001 liegt, wird dieser Wert bei der Berechnung der genannten Parameter verwendet. Ist der Wert des ermittelten Dämpfungsfaktors de≥0,1, so wird der Wert auf de=0,1 gesetzt. Durch die Verwendung des ermittelten Dämpfungsfaktors de bei der Parameterberechnung läßt sich der P-Anteil des Drehzahlreglers 2 bis zum Faktor 10 erhöhen. Dies ist aus dem Diagramm nach Figur 7 zu erkennen, indem die Amplitudenverläufe des offenen Frequenzganges von der Motordrehzahl nM mit und ohne Resonanzfilter 20 einander gegenübergestellt sind. Um den gleichen Faktor werden die dynamischen Eigenschaften, wie Anregelzeit beim Führungs- und Laststörverhalten (Figur 8) sowie die maximale dynamische Regelabweichung beim Laststörverhalten (Figur 9) verbessert.

Durch die weiterentwickelten Einstellregeln sowie einen zusätzlichen Resonanzfilter 20 wird das regeldynamische Verhalten unter Beibehaltung einer robusten Einstellungsstrategie verbessert. Die Einstellregeln sind so gestaltet, daß im Zusammenhang mit einem Selbstoptimierungsverfahren eine einfache Selbstoptimierung eines Drehzahl-Regelkreises unter Berücksichtigung der drehelastischen Mechanik erfolgen kann. Außerdem wird der Nachteil der bekannten Torsionsoptimierungsverfahren, nämlich eine verschlechterte Regeldynamik im Führungs- und im Laststörverhalten, im wesentlichen beseitigt.

Bei einer vorteilhaften Ausgestaltung des Verfahrens zur Torsionsoptimierung eines drehzahlgeregelten Antriebs mit drehelastischer Mechanik sind die angegebenen Einstellregeln alle gemeinsam als Software-Programm in der Selbstoptimierungs-Software integriert. In Abhängigkeit eines Vergleiches der ermittelten Torsionsfrequenz fe mit der Summenzeitkonstanten Tn der Drehzahlregelschleife kann das entsprechende Torsionsoptimierungsverfahren ausgewählt werden. Dazu muß dem Selbstoptimierungsverfahren mitgeteilt werden, ob ein zusätzliches Verzögerungsglied 18 und ein Resonanzfilter 20 im Vorwärtszweig dem Drehzahlregler 2 nachgeschaltet sind. Liegt der Wert der Torsionseigenfrequenz fe im Bereich der Grenzfrequenz fn des Drehzahlregelbereiches (fe≤fn), dann werden die Einstellregeln gemäß Anspruch 1 verwendet. Liegt der Wert der Torsionseigenfrequenz fe außerhalb des Bereiches der Grenzfrequenz fn des Drehzahlregelbereiches (fe>fn), so werden entweder die Einstellregeln gemäß Anspruch 2 oder 3 verwendet, wobei vorher abgefragt wird, ob ein zusätzliches Verzögerungsglied 18 mit nachgeschaltetem Resonanzfilter 20 vorhanden ist.

Somit kann bei Gleich- und Drehstromantrieben mit einem Selbstoptimierungssystem bei der Optimierung der Drehzahlregelschleife die Torsionsoptimierung berücksichtigt werden, ohne daß sich für den Anwender der Aufwand erhöht.

## Patentansprüche

1. Verfahren zur Torsionsoptimierung eines drehzahlgeregelten Antriebs mit drehelastischer Mechanik, wobei ein PI-Regler (2) als Drehzahlregler und eine zusätzliche Drehzahlsollwertglättung (8) verwendet werden, **dadurch gekennzeichnet,** daß in Abhängigkeit eines Hochlauftests und einer vorbestimmten Motorzeitkonstante (TM) des Antriebsmotors eine mechanische Zeitkonstante (Tm) des Antriebssystems und eine Torsionseigenfrequenz (fe) ermittelt werden und daß mit diesen ermittelten Werten (Tm, fe) und der vorbestimmten Motorzeitkonstante (TM) die Reglerverstärkung (VR) und die Nachstellzeit (TN) des PI-Reglers (2) und die Verzögerungszeit (Tgl) der zusätzlichen Drehzahlsollwertglättung (8) wie folgt berechnet und eingestellt werden:

$$VR = \frac{2 \cdot \pi \cdot fe \cdot Tm}{VS \left(\frac{Tm}{TM}\right)^{3/4}}$$

$$TN = \frac{2}{\pi \cdot fe} \cdot \left(\frac{Tm}{TM}\right)^{1/2}$$

$$Tgl = TN$$

wobei VS die Regelstrecken-Verstärkung ist.

2. Verfahren nach Anspruch 1, wobei ein zusätzliches Verzögerungsglied (18) im Vorwärtszweig des Drehzahlregelkreises verwendet wird und wobei mit den ermittelten Werten (Tm, fe), der vorbestimmten Motorzeitkonstante (TM) und eines vorgegebenen Dämpfungsfaktors (de) der Torsionseigenfrequenz (fe) die Reglerverstärkung (VR) und die Nachstellzeit (TN) des PI-Reglers (2), die Verzögerungszeit (Tgl) der zusätzlichen Drehzahlsollwertglättung (8) und die Zeitkonstante (TT) des Verzögerungsgliedes (18) wie folgt berechnet und eingestellt werden:

$$VR = \frac{Tm}{2 \cdot VS \cdot TT}$$

$$TT = \frac{\left(\frac{Tm}{TM} \cdot \frac{Re}{2}\right)^{1/2}}{2 \cdot \pi \cdot fe} \qquad \text{mit } Re \approx \frac{1}{2 \cdot de} ; de = 0,001$$

$$TN = Tgl = 4 \cdot TT$$

wobei VS die Regelstrecken-Verstärkung ist.

3. Verfahren nach Anspruch 2, wobei dem zusätzlichen Verzögerungsglied (18) ein Resonanzfilter (20) nachgeschaltet ist, wobei in Abhängigkeit des Hochlauftests der Dämpfungsfaktor (de) der Torsionseigenfrequenz (fe) ermittelt wird, wobei die Reglerverstärkung (VR) und die Nachstellzeit (TN) des PI-Reglers (2), die Verzögerungszeit (Tgl) der zusätzlichen Drehzahlsollwertglättung (8) und die Zeitkonstante (TT) des Verzögerungsgliedes (18) mit dem ermittelten Dämpfungsfaktor (de) berechnet werden und wobei die Frequenz (ffil) und der Dämpfungsfaktor (dfil) des zusätzlichen Resonanzfilters (20) gleich der Torsionseigenfrequenz (fe) und dem Dämpfungsfaktor (de) der Torsionseigenfrequenz (fe) sind.

4. Verfahren nach einem der Ansprüche 1 bis 3, wobei in Abhängigkeit eines Vergleiches der ermittelten Torsionseigenfrequenz (fe) mit einer Summenzeitkonstanten (Tn) der Drehzahlregelschleife die Parameter (VR, TN, Tgl, TT, ffil, dfil) des PI-Reglers (2), der zusätzlichen Drehzahlsollwertglättung (8), des zusätzlichen Verzögerungsgliedes (18) und des Resonanzfilters (20) gemäß den Vorschriften der Ansprüche 1 bis 3 berechnet werden, wobei die Vorschriften gemäß Anspruch 1 bei einer im Bereich der Grenzfrequenz (fn) des Drehzahlregelbereiches liegenden Torsionseigenfrequenz (fe) und die Vorschriften gemäß Anspruch 2 oder 3 mit einer außerhalb der Grenzfrequenz (fn) des Drehzahlregelbereiches liegenden Torsionseigenfrequenz (fe) verwendet werden, wobei die Vorschriften gemäß Anspruch 3 verwendet werden, wenn ein Resonanzfilter (20) im Drehzahlregelkreis vorhanden ist.

FIG 1

FIG 2

FIG 3

FIG 4

FIG 5

EP 0 797 133 A1

FIG 6

FIG 7

FIG 8

EP 0 797 133 A1

FIG 9

EP 0 797 133 A1

**Europäisches
Patentamt**

# EUROPÄISCHER RECHERCHENBERICHT

Nummer der Anmeldung

EP 97 10 3558

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 676 681 A (MEIDENSHA ELECTRIC MFG CO LTD) 11.Oktober 1995 * das ganze Dokument * --- | 1 | G05B11/42 G05D19/02 |
| A | US 5 384 526 A (BENNETT GEORGE J) 24.Januar 1995 * das ganze Dokument * --- | 1 | |
| A | DD 298 575 A (EIPRO AG) 27.Februar 1992 * das ganze Dokument * ----- | 1 | |

| RECHERCHIERTE SACHGEBIETE (Int.Cl.6) |
|---|
| G05B G05D |

Der vorliegende Recherchenbericht wurde für alle Patentansprüche erstellt

| Recherchenort | Abschlußdatum der Recherche | Prüfer |
|---|---|---|
| DEN HAAG | 22.April 1997 | Kelperis, K |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.................................................................................
& : Mitglied der gleichen Patentfamilie, übereinstimmendes
    Dokument

EPO FORM 1503 03.82 (P04C03)